# EUROPÄISCHE PATENTSCHRIFT

(11) **EP 2 210 825 B1**
(45) Veröffentlichungstag und Bekanntmachung des Hinweises auf die Patenterteilung: **24.10.2012**
(21) Anmeldenummer: 10000687.3
(22) Anmeldetag: 25.01.2010
(51) Int. Cl.: B65D 85/32

(54) **Eiertransportbehälter und Verwendung eines Einsatzes eines Eiertransportbehälters**
Egg transport container and use of an insert of an egg transport container
Conteneur de transport d'oeufs et utilisation d'un insert d'un conteneur de transport d'oeufs

(30) Priorität: 23.01.2009 DE 102009006001
(43) Veröffentlichungstag der Anmeldung: 28.07.2010
(73) Patentinhaber: Hönig-Hof GmbH, 78357 Mühlingen (DE)
(72) Erfinder: Hönig, Christoph, 78357 Mühlingen (DE)
(74) Vertreter: Heyerhoff & Geiger

(56) Entgegenhaltungen:
- EP-A1- 0 423 046
- US-A- 3 462 064
- US-A- 5 344 023

## Beschreibung

Die Erfindung betrifft einen Eiertransportbehälter gemäß dem Oberbegriff des Anspruchs 1. Außerdem betrifft die Erfindung eine Verwendung eines Einsatzes gemäß Anspruch 12.

Eier werden im Einzelhandel üblicherweise in Pappkartons angeboten, in denen sechs oder zehn Eier jeweils einzeln in einer Mulde gehalten verpackt sind. Die Pappkartons sind Einwegbehälter, die nach ihrem Gebrauch entsorgt werden. Zur Schonung von Ressourcen sind Mehrwegverpackungen wünschenswert.

Ein Mehrwegbehälter für Eier ist aus dem US-Patent 5,344,023 bekannt. Die Eier sind in einem Einsatz gelagert, der aus dem Behälter herausnehmbar ist und mit den Eiern in den Kühlschrank gestellt werden kann. Eine weitere Eierverpackung mit einem herausnehmbaren Einsatz ist im US-Patent 3,462,064 offenbart.

Eine besonders einfache Verpackung für Eier ist in der EP 0 423 046 A1 beschrieben. Sie überdeckt einen Eierhalter für vier Eier, in dem die Eier auch gekocht werden können. Hierzu wird die Verpackung vom Eierhalter gelöst und der Eierhalter wird mitsamt der von ihm gehaltenen Eier in einen Topf mit Wasser gestellt, in dem die Eier gekocht werden.

US 3 462 064 offenbart die Merkmale des Oberbegriffs des Anspruchs 1.

Es ist eine Aufgabe der Erfindung, einen Eierbehälter bereitzustellen, in dem Eier sicher und hygienisch transportiert und gelagert werden können.

Diese Aufgabe wird durch einen Eiertransportbehälter gemäß Anspruch 1 gelöst. Durch den herausnehmbaren Einsatz kann der Behälter einfach gereinigt werden, beispielsweise in einer Spülmaschine. Außerdem kann der Einsatz außerhalb des Behälters für eine weitere Verwendung dienen.

Es ist daher eine weitere Aufgabe der Erfindung, eine vorteilhafte Verwendung eines Einsatzes eines Eiertransportbehälters anzugeben.

Diese Aufgabe wird durch eine Verwendung eines Einsatzes eines Eiertransportbehälters gemäß Anspruch 12 gelöst.

Der Einsatz kann aus dem Behälter des Eiertransportbehälters herausgenommen und mit den Eiern direkt in einen Topf mit Wasser gestellt werden, in dem die Eier gekocht werden. Nach dem Kochen kann der Einsatz mit den gekochten Eiern aus dem Wasser genommen und unter kaltes Wasser gehalten und beispielsweise abgestellt werden. Ebenfalls vorteilhaft kann der Einsatz aus dem Behälter entnommen und mit den Eiern direkt in den Kühlschrank gestellt werden, z.B. in dessen Eierfach.

Der Behälter kann aus einem Kunststoff gefertigt sein, zweckmäßigerweise einem spülmaschinenfesten Kunststoff, und weist vorteilhafterweise überwiegend glatte Oberflächen auf, insbesondere sind über 90 % seiner äußeren und inneren Oberfläche glatt oder mit einer nur geringen, leicht zu reinigenden Struktur versehen. Zweckmäßigerweise ist der Behälter zumindest in einem seitlichen Bereich so weit transparent, dass sein Inhalt von außen erkannt werden kann. Dies erleichtert die Sichtprüfung des Inhalts an der Kasse eines Geschäfts und im Haushalt, so dass von außen leicht zu erkennen ist, wie viele Eier im Behälter sind.

Der Einsatz kann aus dem gleichen Material wie der Behälter gefertigt sein und kann aus dem Behälter herausgenommen und in diesen wieder nach unten abgestellt werden. Der Einsatz ist so gestaltet, dass die in ihm gehaltenen Eier bei einem Herausnehmen des Einsatzes aus dem Behälter mit aus dem Behälter herausgenommen und im Einsatz weiterhin sicher gelagert sind.

Der Behälter kann eine Unterschale und einen Deckel zum Verschließen der Unterschale aufweisen und er kann als Dose ausgeführt sein. Der Behälter ist mit Deckel und Unterschale vorteilhafterweise einstückig ausgeführt. Der Deckel ist zweckmäßigerweise mit einem Filmscharnier an der Unterschale befestigt und auf die Unterschale klappbar zum Verschließen des Eiertransportbehälters. Zum sicheren Verschließen von Unterschale und Deckel greifen diese beiden Elemente im geschlossenen Zustand zweckmäßigerweise ineinander ein, z. B. durch Nut und Feder.

Weiter ist es vorteilhaft, wenn der aufklappbare Deckel mit einer Schließeinrichtung an der Unterschale schließend einrastbar ist und die Schließeinrichtung zwei getrennt voneinander angeordnete und redundant zueinander ausgeführte Rastelemente aufweist zum voneinander unabhängigen Schließen des Deckels. Wird der Deckel unabsichtlicherweise nicht ganz richtig verschlossen, so ist doch die Wahrscheinlichkeit hoch, dass zumindest eines der Rastelemente eingerastet ist und den Deckel ausreichend sicher verschlossen hält.

Vorteilhafterweise ist der Behälter mit zumindest einer Belüftungsöffnung versehen. Diese kann in den Deckel eingebracht sein, zweckmäßigerweise in eine Decke des Deckels, also in seiner Oberseite.

Zum sicheren Stapeln von mehreren Eiertransportbehältern übereinander ist der Behälter vorteilhafterweise in einer der Belüftungsöffnung gegenüberliegenden Seite mit einer Ausformung zum Eingreifen in eine Belüftungsöffnung eines oberhalb oder unterhalb gestapelten weiteren Eiertransportbehälters versehen. Auf diese Weise werden mehrere übereinander gestapelte Eiertransportbehälter durch den Eingriff der Ausformung - zweckmäßigerweise den Eingriff mehrerer Ausformungen in mehrere Belüftungsöffnungen - an einem Verrutschen relativ zueinander gehindert.

Ein guter Schutz der Eier gegen eine Beschädigung im Behälter bei Stößen gegen den Behälter kann erzielt werden, wenn der Einsatz in einem Transportzustand des Eiertransportbehälters von allen Seitenwänden des Behälters beabstandet gehalten ist. Hierzu können der Behälter und der Einsatz einen Formschluss bilden, der den Einsatz in einer festgelegten Position im Behälter hält.

In einer weiteren vorteilhaften Ausführungsform der Erfindung ist der Einsatz mit einem Standelement bzw. Fuß zum Stehen auf einem Boden des Behälters versehen, wobei das Standelement und der Boden einen Formschluss bilden. Hierdurch kann eine stabile Halterung des Einsatzes im Behälter erreicht werden, so dass der Einsatz - trotz einer eventuellen Beabstandung von den Seitenwänden des Behälters - gegen ein Verrutschen im Behälter gesichert ist. Zweckmäßigerweise sichert der Formschluss den Einsatz gegen ein Verrutschen auf den Boden in zwei senkrecht zueinander stehenden Richtungen. Hierdurch ist der Einsatz zweidimensional am Boden fixiert, sodass er zweckmäßigerweise nur nach oben, also in eine Richtung, aus dem Behälter herausgenommen werden kann. Durch den Formschluss kann der Einsatz vorteilhafterweise in einem Transportzustand von allen Seitenwänden des Behälters beabstandet gehalten werden, sodass Schläge auf den Behälter nicht direkt auf die gelagerten Eier übertragen werden können.

Der Formschluss erstreckt sich vorteilhafterweise über mehr als 1 mm, insbesondere mehr als 2 mm, in senkrechter Richtung. Er bleibt so erhalten, wenn der geschlossene Behälter überkopf gehalten wird, so dass der Einsatz auch bei einem kleinen senkrechten Spiel in jeder Lage des geschlossenen Behälters in seiner durch den Formschluss festgelegten Position bleibt.

Bei verschlossenem Behälter ist der Einsatz zweckmäßigerweise in allen drei Raumdimensionen im Behälter fixiert. Eine Fixierung nach oben hin kann durch ein Anliegen eines Elements des Einsatzes, z.B. eines Griffelements, am Deckel erfolgen.

Es ist auch ausreichend, wenn der Einsatz so hoch ist, dass er bei geschlossenem Behälter ein senkrechtes Spiel von weniger als 1 mm zu einem waagerechten und höchsten Bereich des Deckels des Behälters hat. Wird der Deckel, z.B. in seiner Mitte, von oben gedrückt, so kommt er an den Einsatz zu liegen, der den Deckel gegen weiteres Eindrücken abstützt. Hierdurch erhält der Behälter eine hohe Stabilität und die Eier werden vor einem Druck von oben geschützt.

Bei einer weiteren vorteilhaften Ausführungsform des Eiertransportbehälters ist der Einsatz mit einem definierten seitlichen Spiel zwischen 1 mm und 3 mm im Behälter gelagert, so dass sich der Einsatz und die in ihm gelagerten Eier bei einem seitlichen Stoß als Ganzes entsprechend dem Spiel seitlich bewegen. Bei kleinen Stößen oder stärkeren Vibrationen verschiebt sich der Einsatz mit den Eiern im Behälter, so dass die Stoßenergie nicht oder nur mit geringem Anteil auf die Eier übertragen wird. Dies bewirkt, dass die Eier im Einsatz weniger klappern als in einem im Behälter starr fixierten Einsatz.

Eine weitere Ausführungsform der Erfindung sieht vor, dass der Einsatz mit einem Fuß zum Stehen auf einem Boden des Behälters versehen ist und der Fuß eine Ausformung zum punktförmigen Stehen auf einer planen Oberfläche aufweist. Wird der Einsatz mitsamt seiner Eier aus dem Behälter heraus und in einen Topf mit Wasser hereingeführt, so steht der Einsatz im Topf auf einer planen Oberfläche. Durch die punktförmige Lagerung kann der Einsatz im Topf besonders gut von heißem Wasser umspült werden, sodass ein gleichmäßiges Kochen der Eier begünstigt wird. Eine Punktform beinhaltete eine oder mehrere Standflächen von jeweils maximal 4 mm², insbesondere 1 mm².

Weist der Einsatz einen Haken zum Einhängen an einen Topfrand auf, so kann der Einsatz außen oder innen am Topf gelagert werden, beispielsweise wenn das Kochwasser noch nicht kocht; sodass eine Küchenarbeitsfläche freigehalten wird. Sobald das Wasser kocht, kann der Einsatz vom Topfrand ausgehakt und in das kochende Wasser gebracht werden.

Ein Herausnehmen des Einsatzes aus dem Behälter wird durch ein Griffelement des Einsatzes erleichtert. Dieses ist zweckmäßigerweise im geometrischen Zentrum des symmetrischen Einsatzes angeordnet, sodass ein Hochheben des Einsatzes am Griff nicht zu einem Verkippen des Einsatzes führt. Allgemein gesprochen liegt der Schwerpunkt des Einsatzes zweckmäßigerweise bei im Behälter aufgestelltem Einsatz unterhalb des Griffs. Rings um den Griff können somit mehrere Eier angeordnet sein.

Eine gute Haptik kann erreicht werden, wenn das Griffelement mindestens doppelt so hoch über den Boden des Behälters aufragt wie der höchste Punkt von den Halteelementen, die gelagerte Eier radial außen halten. Außerdem kann der Einsatz mit dem hohen Griffelement in heißes Wasser gestellt werden wobei die haltenden Finger weit genug vom Wasser entfernt sind, um nicht zu stark erhitzt zu werden. Das Griffelement ist zweckmäßigerweise zumindest 45 mm, insbesondere zumindest 55 mm, hoch über einem Boden, auf dem der Einsatz steht. In dieser Ausführung überragt es auch die gehalterten Eier und kann diese von einem Druck von oben auf den Deckel des Behälters schützen. Hierzu ragt das Griffelement insbesondere weniger als 1 mm von unten an den geschlossenen Deckel des Behälters heran.

Eine universelle Verwendbarkeit des Griffelements kann durch eine bewegliche Lagerung des Griffelements im Einsatz begünstigt werden. Um Verbrennungen beim Einführen des Einsatzes in kochendes Wasser vorzubeugen, ist das Griffelement vorteilhafterweise in eine untere und in eine obere, von im Einsatz gelagerten Eiern weiter entferntere Position bringbar. In der unteren Position des Griffelements ist dieses nahe an den Eiern angeordnet, sodass ein Deckel des Behälters über dem Griffelement geschlossen werden kann. Durch die Bewegung in seine obere Position, die zweckmäßigerweise zumindest 2 cm beträgt, insbesondere zumindest 4 cm, kann das Griffelement so weit von den Eiern entfernt werden, dass es auch bei vollständig von kochendem Wasser überspülten Eiern noch weit genug von der Wasseroberfläche entfernt ist und keine gefährliche Hitze vom kochenden Wasser zu einem Finger am Griffelement gelangt.

Damit das Griffelement in seiner oberen Stellung verbleibt und der Einsatz gefahrlos aus dem kochenden Wasser wieder herausgenommen werden kann, ist der Einsatz zweckmäßigerweise mit einem Mittel zum Arretieren des Griffelements in seiner oberen Position versehen. Dieses Mittel kann ein Rastmittel sein, so dass das Griffelement in seiner oberen Position einrastet. Durch einen leichten Druck von oben nach unten auf das Griffelement kann ein Ausrasten bewirkt werden, so dass das Griffelement wieder in seine untere Position gebracht werden kann.

Weiter ist es vorteilhaft, wenn das Griffelement eine Öffnung zum Hindurchführen eines Fingers aufweist, so dass ein sicheres Halten des Einsatzes gewährleistet ist.

Zum Lagern zumindest eines Eis ist der Einsatz mit zumindest einem Eihalter versehen, zweckmäßigerweise mit vier Eihaltern. Der Eihalter ist in der Form einer Suppenkelle gebildet, die in ihrer Kelle oder Schale das Ei hält und mit einem dem Griff entsprechenden Segment bzw. Halter mit den übrigen Elementen des Einsatzes verbunden ist. Durch diese Formgebung des Eihalters kann eine federnde Lagerung des Eis im Einsatz erreicht werden, wodurch eine hohe Sicherheit gegen eine Beschädigung des Eis erzielbar ist. Hierbei liegen das geometrische Zentrum des Einsatzes, der Halter und die Schale in einer Linie. Die Eier sind so rondellartig um das Zentrum gelagert und können von wenig Material sicher gehalten werden. Ein gutes Umspülen der Eier mit kochendem Wasser kann hierdurch unterstützt werden.

Eine sichere Lagerung der Eier wird durch ein Loch im Eihalter zum Boden hin begünstigt, so dass kleine Eier auf Lochkante stehen. Zweckmäßigerweise hat das Loch einen Kragen nach unten, der auf dem Boden aufsteht. Es ist vorteilhaft, wenn der Abstand der Lochkante, auf der Eier stehen zumindest 1 mm ist, damit das auf der Lochkante stehende Ei an seinem tiefsten Punkt nicht auf dem Boden aufliegt.

Eine sichere Lagerung der Eier wird weiter begünstigt, wenn die Schale des Eihalters an jedem Ort - ggf. bis auf Bereiche näher als 2 mm zu einer Ausnehmung oder den Rand der Schale - eine im mathematischen Sinne positive Krümmung aufweist. Für jeden Punkt gilt hierbei, dass die Schale in keinem Punkt in eine Ebene abwickelbar ist. Oder: Zwei sich in einem Punkt schneidende Schnittlinien durch die Schale sind im Schnittpunkt in die gleiche Richtung, nämlich zum Ei hin, gekrümmt. Das gilt zweckmäßigerweise für alle Geraden durch alle Punkt der Schale, ggf. bis auf die Randpunkte.

Eine gute Umspülung des gelagerten Eis mit kochendem Wasser kann durch eine Öffnung begünstigt werden, die im Eihalter in seinem dem Griff der Suppenkelle entsprechenden Segment eingearbeitet ist. Mit gleichem Vorteil sind in dem der Kelle der Suppenkelle entsprechenden segment mehrere Ausnehmungen eingebracht. Ebenfalls vorteilhaft für eine gute Umspülung ist eine Öffnung des Eihalters nach unten zum Behälter hin.

Eine sichere Lagerung eines Eis im Eihalter kann dadurch erreicht werden, dass der Eihalter eine Dreipunktauflage zum Halten des Eis an genau drei vaneirlander beabstandeten Regionen bildet. Eine besonders sichere Lagerung der Eier genen Stöße kann erreicht werden, wenn der Eihalter mehrere Anlageelemente zur Anlage am gehalterten Ei aufweist, von denen zumindest zwei als Federelemente zum federnden Halten des Eis ausgebildet sind. Die beiden federnden Anlageelemente sind zweckmäßigerweise unabhängig voneinander federnd. Sie können als Ganzes federn und federn zweckmäßigerweise zumindest 0,2 mm unter dem Gewicht eines normalen bzw. durchschnittlichen Eis. Besonders einfach wird die Federwirkung durch die Ausgestaltung der federnden Anlageelemente als Finger erreicht.

Weist der Eihalter Ausformungen zum punktförmigen Halten des Eis auf - insbesondere in einer ansonsten glatten Fläche - so können gelagerte Eier auch im Bereich ihrer Halterung gut umspült werden.

In einer vorteilhaften Form des Einsatzes hat dieser mehrere gleiche Eihalter zum Halten jeweils eines einzigen Eis, die karussellartig rotationssymmetrisch um eine geometrische Mitte des Einsatzes angeordnet sind. Ein sparsamer Materialeinsatz und eine gute Umspülung der Eier kann mit einer speziellen Ausführungsform erreicht werden, in der jeder Einsatz von seinen beiden benachbarten Einsätzen außerhalb eines durch die Zentren von gelagerten Eiern gehenden Radius um die Mitte voneinander beabstandet sind.

Eine weitere vorteilhafte Ausführungsform der Erfindung sieht vor, dass der Einsatz zumindest einen Eihalter zum Halten eines einzigen Eis und zumindest einen Fuß zum Stehen auf einer planen Oberfläche umfasst, sodass der Eihalter von der Oberfläche beabstandet ist. Hierdurch sind die gelagerten Eier zum einen im Behälter gut gegen Stöße von unten geschützt und zum anderen können sie bei der Anordnung des Einsatzes in einem Topf mit kochendem Wasser gut von unten umspült werden. Zweckmäßigerweise ist der Eihalter federnd zur Oberfläche bzw. zu einem Boden des Behälters ausgeführt, wobei ein Federweg unter dem Gewicht eines normalen bzw. durchschnittlichen bzw. mittelgroßen Eis um zumindest 0,2 mm, zweckmäßigerweise 0,5 mm, insbesondere 1 mm beträgt.

Ein stabiles Stehen des Einsatzes sowohl im Behälter als auch in einem Topf kann erreicht werden, wenn der Einsatz mehrere Eihalter zum Halten jeweils eines einzigen Eis und mehrere Füße zum Stehen auf einer planen Oberfläche umfasst, wobei zwischen benachbarten Eihaltern stets ein Fuß angeordnet ist.

Der Einsatz und mit ihm zweckmäßigerweise eine Mehrzahl von Eiern kann in einfacher Weise aus dem Behälter herausgenommen und in einen Topf mit kochendem Wasser gestellt werden. Die Eier sind beim Kochen sicher gelagert und ein Aneinanderschlagen der Eier und insbesondere ein Schlagen der Eier gegen den Topfboden oder Seitenwände kann zuverlässig vermieden werden.

Hierzu wird der Einsatz vorteilhafterweise aus einem Behälter des Eiertransportbehälters an einem Griffelement herausgenommen und unter Festhalten des Griffelements in kochendes Wasser im Topf abgestellt. Mehrere Eier können somit mit einem Handgriff direkt vom Eiertransportbehälter in den Topf transportiert werden.

Vorteilhafterweise wird das Griffelement vor dem Herausnehmen des Einsatzes aus dem Behälter mit Hilfe eines Auszugs ausgezogen und somit von den Eiern entfernt und in einer entfernten Position arretiert. Durch die entfernte Position kann der Einsatz ohne eine Verbrennungsgefahr des Bedieners in das heiße Wasser eingerührt und im Topf abgestellt werden.

Der Einsatz ist zweckmäßigerweise so geformt und die Wasserhöhe so gewählt, dass das heiße Wasser den Einsatz bis auf einen zentralen Bereich überspült. Eine gute Umspülung der Eier kann mit der speziellen Ausführungsform erreicht werden, bei der der Radius des zentralen Bereichs parallel zum Wasserspiegel weniger als 60% des Gesamtradius des Einsatzes ausmacht. Ragt das Griffelement höher über das heiße Wasser auf, als das Wasser tief ist, kann der Griff sicher angefasst werden, ohne dass die Finger zu heiß werden.

Für ein gutes Kochen der Eier muss eine geeignete Wasserhöhe im Topf ausgewählt werden, die nicht zu hoch sein sollte, damit der Einsatz ohne Verbrennungen in den Topf mit heißem Wasser gestellt werden kann. Eine Wasserhöhe von 8 mm bis 15 mm ist ausreichend. Das Finden der geeigneten Wasserhöhe oder Wassertiefe im Topf wird erleichtert, da der Einsatz ein Bauelement mit einer waagerechten Kante aufweist, die zweckmäßigerweise in etwa in Höhe der geeigneten Wassertiefe ist. Die Menge an Wasser im Topf wird so gewählt, dass die Kante weniger als 5 mm unterhalb der Wasseroberfläche ist.

Um die Umwelt zu schonen und Energie zu sparen, ist es wünschenswert, die Eier mit wenig Energie zu kochen. Dies wird durch die Verwendung des Einsatzes sehr erleichtert. Denn ein gleichmäßiges Kochen der Eier ist auch ohne die übliche vollständige Bedeckung der Eier mit kochendem Wasser durchaus möglich. Hierzu sollten die Eier jedoch beim Kochen vom heißen Topfboden beabstandet sein, damit sie - beim Kochen mit nur wenig Wasser wenn sie vom heißen Dampf umspült werden - nicht an ihrer Unterseite am Topfboden stärker erhitzt werden als an der Oberseite am Dampf und ungleichmäßig durchkochen. Die Beabstandung wird durch die Verwendung des Einsatzes beim Kochen erreicht. Hierdurch können die Eier mit nur wenigen Millimetern Wasser im Topf gekocht werden. Die optimale Wasserhöhe kann durch ein anzeigendes Bauelement, z.B. das Bauelement mit einer waagerechten Kante, angezeigt werden, so dass der Benutzer angeleitet wird, die Eier energie- und umweltschonend zuzubereiten.

Weiterhin vorteilhaft ist es, wenn der Einsatz über einen Rand des Topfes gehängt wird, da hierdurch Ablagefläche eingespart werden kann.

Die Erfindung wird anhand von Ausführungsbeispielen näher erläutert, die in den Zeichnungen dargestellt sind.

Es zeigen:
- Fig. 1: Einen Eiertransportbehälter mit zwei in einem Behälter angeordneten herausnehmbaren Einsätzen,
- Fig. 2: einen Einsatz in einer Seitenansicht im Behälter,
- Fig. 3: einen weiteren Einsatz in einer Seitenansicht und
- Fig. 4: zwei weitere Einsätze in einer perspektivischen Darstellung.

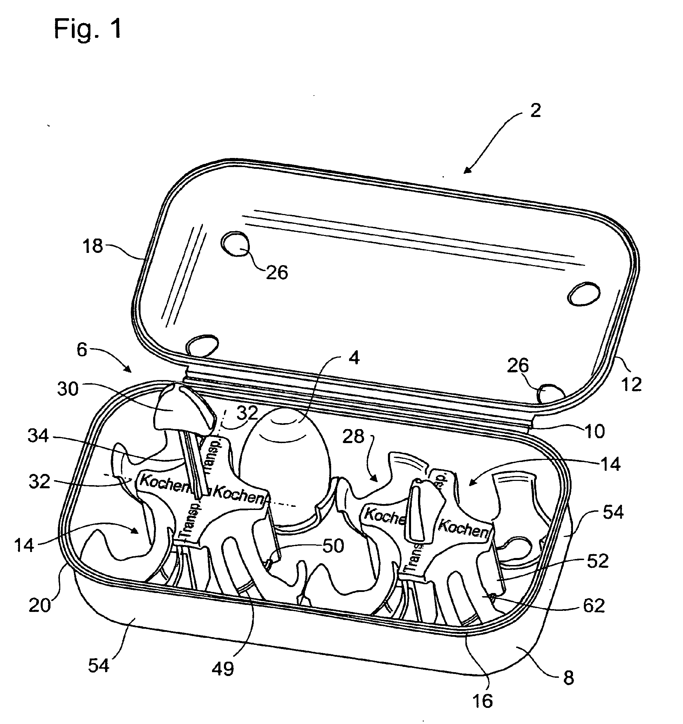

Figur 1 zeigt einen Eiertransportbehälter 2 zum Transport und zur Lagerung von acht Eiern 4, von denen der Übersichtlichkeit halber in Figur 1 nur ein Ei 4 dargestellt ist. Der Eiertransportbehälter 2 besteht aus einem Behälter 6 in Form einer Kunststoffdose mit einer Unterschale 8, die über ein Filmscharnier 10 mit einem Deckel 12 des Behälters 6 fest verbunden ist, und zwei Einsätzen 14. Zum Verschließen des Behälters 6 kann der Deckel 12 durch die leichte Beweglichkeit des Filmscharniers 10 auf die Unterschale 6 geklappt werden, wobei eine Nut 16 im Rand des Behälters 6 eine Feder 18 im Rand des Deckels 12 aufnimmt in der Art einer Nut- und Federverbindung. Diese kann klemmend ausgeführt sein, sodass der Behälter 6 verschlossen ist, oder der Deckel 12 kann mit Hilfe eines nicht dargestellten Verschlusses an der Unterschale 8 gehalten bleiben, z. B. mit Hilfe eines Rastklipps, der unter einem Wulst 20 am Rand der Unterschale 8 im verschlossenen Zustand des Behälters 6 einrastbar ist.

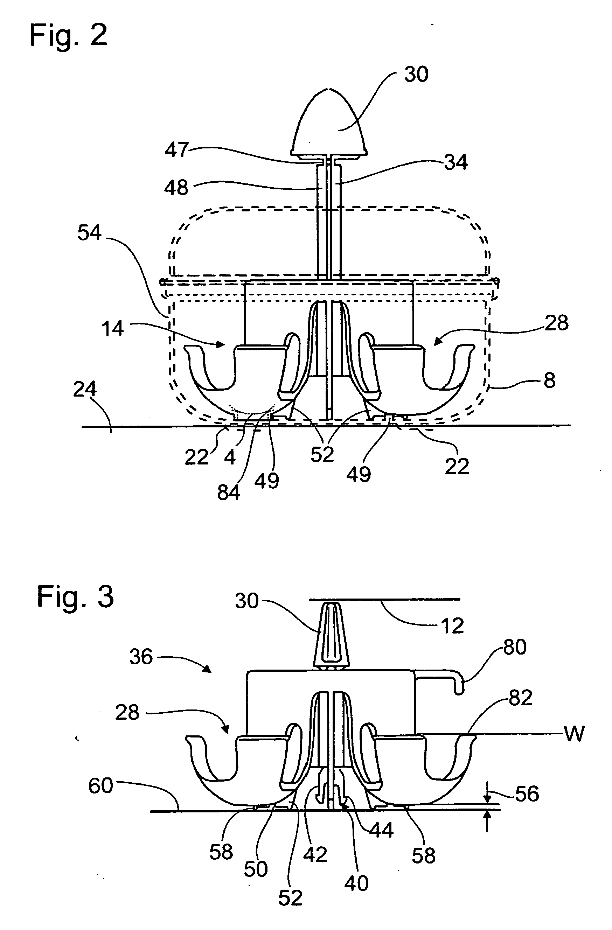

Figur 2 zeigt einen der beiden Einsätze 14 in einer Seitenansicht, wobei der Behälter 6 gestrichelt um den Einsatz 14 angedeutet ist. An seiner Unterschale 8 ist der Behälter 6 mit vier Ausformungen 22 versehen, die als Füsse dienen, auf denen der Behälter 6 auf einer glatten Oberfläche 24, beispielsweise einer Küchenarbeitsplatte, steht. Die Ausformungen 22 sind genau gegenüber von Belüftungsöffnungen 26 im Deckel 12 des Behälters 6 angeordnet, sodass bei zwei übereinander gestapelten Behältern 6 die Ausformungen 22 des oben stehenden Behälters 6 in die Belüftungsöffnungen 26 des darunter angeordneten Behälters 6 eingreifen. Durch einen solchen Formschluss zweier aufeinander gestapelter Behälter 6 kann ein Verrutschen des oberen Behälters gegenüber dem unteren Behälter vermieden werden und es kann ein stabiler Stapel aus übereinander gestapelten Behältern 6 gebildet werden.

Die beiden Einsätze 14 sind jeweils zum Halten von vier Eiern 4 ausgestaltet, wobei jeder Einsatz 14 vier Eihalter 28 aufweist, die rondellartig und symmetrisch um ein Griffelement 30 des Einsatzes 14 angeordnet sind. Die Einsätze 14 sind jeweils spiegelsymmetrisch zu zwei senkrechten und senkrecht zueinander angeordneten Ebenen 32 ausgeführt, die in Figur 1 durch jeweils eine strichpunktierte Linie angedeutet sind. Durch diese doppelte Spiegelsymmetrie befindet sich der Gewichtsschwerpunkt des Einsatzes 14 ohne Eier 4, mit zwei gegenüberliegenden oder vier gleichen Eiern 4 in der Kreuzungslinie der beiden Symmetrieebenen 32, die auch durch das Griffelement 30 hindurch verläuft. Durch diese Anordnung des Griffelements 30 kann ein Einsatz 14 am Griffelement 30 nach oben gehoben werden, ohne dass der Einsatz 14 verkippt. Die Eier 4 bleiben somit auch bei einem Herausnehmen des Einsatzes 14 aus dem Behälter 6 stabil und sicher gelagert.

Zum noch sichereren Transport der aus dem Behälter 6 herausnehmbaren Einsätze 14 ist das Griffelement 30 mit einem Auszug 34 verbunden, die relativ zu den Eihaltern 28 nach oben ziehbar ist, sodass das Griffelement 30 im Einsatz 14 nach oben und unten verschieblich beweglich gelagert ist. In Figur 1 ist das Griffelement 30 am linken Einsatz 14 in seiner ausgezogenen und oberen Position dargestellt und am rechten Einsatz 14 in seiner unteren Position, in der der Deckel 12 über den Einsatz 14 und das Griffelement 30 herunterklappbar und der Behälter 6 verschließbar ist.

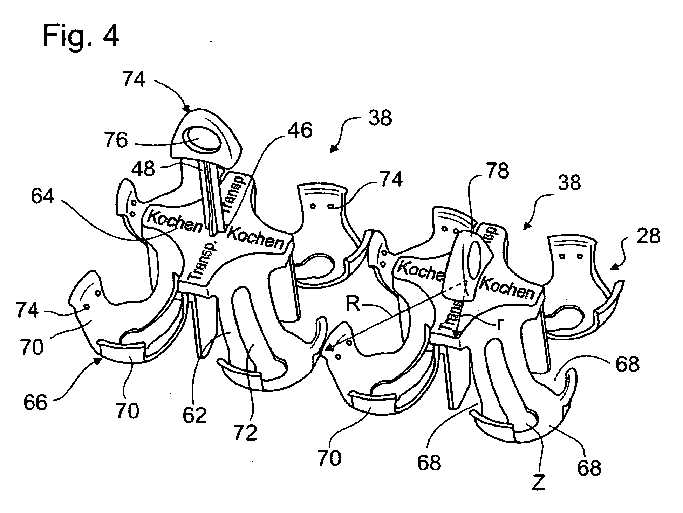

In den Figuren 3 und 4 sind jeweils alternative Einsätze 36, 38 dargestellt, die jedoch in den weit überwiegenden Details mit den Einsätzen des Ausführungsbeispiels aus den Figuren 1 und 2 übereinstimmen. Die unterschiedlichen Details der Ausführungsbeispiele sind alle beliebig austauschbar und miteinander kombinierbar und sowohl einzeln nur für sich verwendbar als auch in beliebiger Anzahl miteinander kombinierbar. Sie sind nur der Übersichtlichkeit halber nicht in jeder Figur alle dargestellt. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Damit das Griffelement 30 in seiner oberen Position arretierbar ist, umfasst jeder Einsatz 14, 36, 38 ein Arretiermittel 40 in Form eines Rastelements, durch das das Griffelement 30 in seiner oberen Position einrastbar ist. Das Arretiermittel 40 ist mit vier Armen 42 versehen, die senkrecht zu einer Bewegungsrichtung des Griffelements 30 elastisch verbiegbar sind. An die Arme 42 ist jeweils eine Ausformung 44 angeformt, durch die ein Ablösen des Griffelements 30 von den übrigen Elementen des Einsatzes 14 verhindert wird. In der oberen Position des Griffelements 30 sind die Arme 42 in eine Öffnung 46 (siehe Figur 4) klemmend eingebracht, wobei die Ausformungen 44 Ränder der Öffnung 40 eines Mittelelements 64 hintergreifen und das Gewicht der übrigen Teile des Einsatzes 14 und die vier Eier 4 bei einem Halten am Griffelement 30 tragen. Die Arretierung kann gelöst werden, indem das Griffelement 30 etwas stärker nach unten gedrückt wird, sodass die Verklemmung gelöst und das Griffelement 30 wieder in seine untere Position gebracht wird.

Auch in seiner unteren Position ist das Griffelement 30 arretierbar, um einen Transport seines Einsatzes 14 in unausgezogenem Zustand des Auszugs 34 zu ermöglichen. Hierzu ist das Griffelement um 90° zu verdrehen, wie in Fig. 1 und Fig. 4 dargestellt ist. Das Verdrehen des Auszugs 34 in der Öffnung 40 in der unteren Position des Griffelements 30 wird durch eine Ausnehmung 47 (Fig. 2) im Auszug 34 ermöglicht. Durch unterschiedliche Abmessungen in Dicke und Tiefe der überkreuzten Stege 48 des Auszugs 34 hintergreifen diese im unten arretierten Zustand die Ränder der Öffnung 40 des Mittelelements 64 und halten das Griffelement 30 in seiner unteren Position. Um ein ungewolltes Verdrehen des Auszugs 34 in der Öffnung 40 beim Transport des Einsatzes 14 zu verhindern, kann das Mittelelement 64 in seiner Unterseite eine kleine Ausnehmung aufweisen, in die ein oder mehrere Stege 48 im arretierten Zustand eingreifen und so einen Formschluss mit dem Mittelelement 64 bilden. Zum sicheren Erkennen der jeweiligen Position des Griffelements 30 ist das Mittelelement 64 auf seiner Oberseite mit den Schriftzügen "Transp." für Transport in der unteren Stellung des Griffelements 30 und "Kochen" für die obere Stellung des Griffelements 30 versehen.

Unabhängig davon, ob das Griffelement 30 zum restlichen Einsatz 36 beweglich ist oder nicht, ist seine Höhe so gewählt, dass es bis knapp unter den verschlossenen Deckel 12 ragt, wie in Figur 3 angedeutet ist, oder daran anstößt. Ein Spalt zwischen Griffelement 30 und Deckel 12 beträgt in jedem Fall weniger als 1 mm.

Das Griffelement 30 ragt etwa 60 mm über einem Boden 60 auf und ist damit knapp drei mal so hoch über dem Boden 60 wie obere Kanten 82 von Anlagesegmenten 70. Diese Kanten 82 sind waagerecht ausgeführt und dienen als Wasserstandsanzeiger, nach denen eine zum Kochen gut geeignete Menge Wasser in den Topf gegeben werden kann. Die Wassertiefe W, die in Figur 3 angedeutet ist, sollte so sein, dass die Kanten 82 gerade überspült sind.

Zum sicheren und fixierten Stehen eines jeden Einsatzes 14 im Behälter 6 greifen die Unterschale 8 und die Einsätze 14 formschlüssig ineinander. Dieser Formschluss wird bei dem in den Figuren 1 und 2 gezeigten Ausführungsbeispiel durch eine ringförmige Ausformung 49 im Boden der Unterschale 8 bewirkt, die in entsprechende Ausnehmungen 50 in Füßen 52 der Einsätze 14 eingreift. Ist dieser Formschluss bei einem Einsetzen der Einsätze 14 in den Behälter 6 erreicht, so sind die Einsätze 14 an einer Bewegung parallel zur Oberfläche 24 bzw. parallel zum Boden der Unterschale 8 relativ zum Behälter 6 gehindert, sodass ein Verrutschen der Einsätze 14 im Behälter 6 vermieden wird. In dieser Position sind die Einsätze 14 so im Behälter 6 angeordnet, dass sie ein Stück weit von den Seitenwänden 54 des Behälters 6 beabstandet sind, wie in Fig. 2 zu sehen ist. Hierdurch sind auch die gehaltenen Eier 4 ein Stück weit von den Seitenwänden 54 beabstandet, sodass ein Stoß auf die Seitenwände 54 nicht unmittelbar auf die Eier 4 übertragen wird.

Alternativ kann der Formschluss ein definiertes seitliches Spiel des Einsatzes 14 im Behälter 6 zwischen 1 mm und 3 mm zulassen, so dass sich der Einsatz 14 und die in ihm gelagerten Eier bei einem seitlichen Stoß als Ganzes entsprechend dem Spiel seitlich bewegen können.

Die Füße 52 sind in ihrer Anordnung so bemessen, dass sie die Eihalter 28 bei einem direkten Stehen des Einsatzes 14, 36, 38 auf der Oberfläche 24 um eine Strecke 56 von der Oberfläche 24 beabstandet halten. Bei einem Aufstellen des Einsatzes 14, 36, 38 auf der Oberfläche 24 berühren die Eihalter 28 die Oberfläche 24 somit nicht, sodass ein Aufstoßen der Eihalter 28 bzw. Eier 4 auf der Oberfläche 24 vermieden wird. Außerdem sind die vier Füße 52 eines jeden Einsatzes 14 mit jeweils zwei Erhebungen 58 versehen, auf denen der Einsatz 14 auf der Oberfläche 24 jeweils punktförmig aufliegt. Ist der Einsatz 14 in einem Topf mit kochendem Wasser eingeführt und steht mit den Erhebungen 58 auf einem Topfboden 60 analog zur Oberfläche 24, so können die Füße 52 weitgehend von Wasser umspült werden, sodass auch eine gute Umspülung der Eier 4 mit kochendem Wasser gewährleistet ist.

Die vier Eihalter 28 eines Einsatzes 14, 36, 38 sind jeweils in der Art einer Suppenkelle geformt und mit einem dem Griff der Suppenkelle entsprechenden Segment 58 an einem Mittelelement 64 des Einsatzes 14 und somit mittelbar aneinander befestigt. Die vier gleichen Eihalter 28 sind karussellartig rotationssymmetrisch um eine geometrische Mitte des Einsatzes 14, 36, 38 angeordnet. Wie aus Figur 4 gut zu sehen ist, ist jeder Eihalter 28 radial außen von seinen beiden benachbarten Eihaltern 28 beabstandet. Der Radius r des zentralen Bereichs 64 bzw. Mittelelemente 64, in dem die Eihalter 28 miteinander verbunden sind, beträgt hierbei weniger als die Hälfte des maximalen Radius R des Einsatzes 14, 36, 38. Legt man einen gedachten Kreis durch die Zentren Z der kreissegmentförmigen Teile der Öffnungen 72, die direkt unterhalb der Zentren der gelagerten Eier liegen, so sind die Eihalter 28 radial außerhalb dieses Kreises voneinander getrennt und beabstandet.

Durch die Ausführung des Einsatzes 14 aus einem elastischen Kunststoff federn die Eihalter 28 im Segment 62 beim Einlegen eines Eis 4 in den Eihalter 28 nach unten, sodass das Ei 4 im Eihalter 28 federnd gelagert ist. Ein Stoß von unten auf den Behälter 6 oder von der Seite wird somit zwar direkt auf die Füße 52 und damit auf den Einsatz 14, 36, 38 übertragen, jedoch durch die federnde Lagerung der Eier 4 in den Segmenten 62 ein Stück weit aufgefangen, sodass die Eier 4 im Behälter 6 sehr transportsicher gelagert sind.

Zur besseren Umspülung der Eier 4 im Topf ist ein Segment 66, das in seiner Formgebung der Kelle der Suppenkelle nachgebildet ist, mit drei Ausnehmungen 68 versehen, sodass der Eihalter 28 zwei fingerartige Anlagesegment 70 aufweist. Ein Ei 4 im Eihalter 28 wird hierdurch an den beiden fingerartigen Anlagesegmenten 70 und am Segment 62 in der Art einer Dreipunktlagerung an drei voneinander beabstandeten Regionen gelagert. Durch eine Öffnung 72, die ebenfalls einer Umspülung eines gehaltenen Eis 4 mit kochendem Wasser förderlich ist und die bis unter das Ei 4 führt, kann einer der drei Lagerstellen in zwei sehr nahe beieinander liegende Lagerpunkte aufgeteilt werden, wodurch der Effekt der Dreipunktlagerung nicht beeinträchtigt ist.

Eine andere Ausführung der Öffnung 72 ist in Figur 2 angedeutet. Die Öffnung ist mit einem zum Boden 60 weisenden, kreissegmentförmigen Kragen versehen, auf dessen Innenkante 84 ein Ei steht. Der Eihalter 28 steht mit dem Kragen auf dem Boden und wird so nach unten abgestützt.

Die fingerartigen Anlagesegmente 70 sind ebenfalls elastisch und zwar bereits in sich, sodass ein Einlegen eines mittleren Eis 4 in den Eihalter 28 zu einer leichten Aufspreizung der fingerartigen Anlagesegmente 70 um zumindest 0,3 mm führt. Hierdurch ist das Ei 4 sicher gelagert und rutscht bei einem starken Stoß auf den Behälter 6 von unten nur ein Stück weit tiefer in den Eihalter 28 hinein und spreizt somit die fingerartigen Anlagesegmente 70 noch ein Stück weiter, ohne jedoch direkt von unten in den Kontakt mit dem Eihalter 28 zu kommen. Dies begründet eine sehr stoßfeste Lagerung.

Um eine punktförmige Lagerung eines Eis 4 im Eihalter 28 zu erreichen kann der Eihalter 28 zum Ei gerichtete Ausformungen 74 aufweisen, an denen ein gehaltenes Ei 4 punktförmig.anliegt. Hierdurch wird ein Umspülen eines gehaltenen Eis 4 von kochendem Wasser im Topf gefördert und somit ein gleichmäßiges und schnelles Kochen des Eis 4.

Bei dem in Fig. 4 gezeigten Ausführungsbeispiel ist das Griffelement 76 mit einer Öffnung 78 versehen, durch die sich zwei Finger, die das Griffelement 76 beidseitig halten, durch das Griffelement 76 hindurch berühren können. Einem Herausrutschen des Griffelements 76 und damit des Einsatzes 38 aus den haltenden Fingern wird hierdurch entgegengewirkt.

Bei dem in Fig. 3 dargestellten Ausführungsbeispiel ist der Einsatz 36 mit einem Haken 80 versehen, mit dem der Einsatz 36 über einen Topfrand gehängt werden kann. Der Haken 80 ist symmetrisch zwischen zwei Eihaltern 28 angeordnet, so dass sich der Einsatz 36 in eingehängtem Zustand mit den Eihaltern 28 außen am Topfrand abstößt und der Einsatz 36 hierdurch an drei Punkten gehalten ist: am Haken 80 und an den beiden Eihaltern 36.

### Bezugszeichenliste

- 2: Eiertransportbehälter
- 4: Ei
- 6: Behälter
- 8: Unterschale
- 10: Filmscharnier
- 12: Deckel
- 14: Einsatz
- 16: Nut
- 18: Feder
- 20: Wulst
- 22: Ausformung
- 24: Oberfläche
- 26: Belüftungsöffnung
- 28: Eihalter
- 30: Griffelement
- 32: Ebene
- 34: Auszug
- 36: Einsatz
- 38: Einsatz
- 40: Arretiermittel
- 42: Arm
- 44: Ausformung
- 46: Öffnung
- 47: Ausnehmung
- 48: Steg
- 49: Ausformung
- 50: Ausnehmung
- 52: Fuß
- 54: Seitenwand
- 56: Strecke
- 58: Erhebung
- 60: Topfboden
- 62: Segment
- 64: Mittelelement
- 66: Segment
- 68: Ausnehmung
- 70: Anlagesegment
- 72: Öffnung
- 74: Ausformung
- 76: Griffelement
- 78: Öffnung
- 80: Haken
- 82: Kante
- 84: Innenkante

## Patentansprüche

1. Eiertransportbehälter (2) zum Transport und zur Lagerung einer Anzahl von Eiern (4), aufweisend einen die Eier (4) umgreifenden äußeren Behälter (6) und zumindest einen im Behälter (6) angeordneten und aus dem Behälter (6) herausnehmbaren Einsatz (14, 36, 38) zur Halterung von zumindest einem Ei innerhalb des Behälters (6), wobei der Einsatz (14, 36, 38) zumindest einen Eihalter (28) zum Halten eines einzigen Eis (4) aufweist und der Eihalter (28) in Form einer Suppenkelle mit einem dem Griff der Suppenkelle entsprechenden Halter und einer Schale gebildet ist, wobei das geometrische Zentrum des Einsatzes (14, 36, 38), der Halter und die Schale in einer Linie liegen,
**dadurch gekennzeichnet, dass** der Eihalter (28) mehrere flächig und als Finger ausgeführte Anlagesegmente (70) zur Anlage am gehalterten Ei (4) aufweist, von denen zumindest zwei als Federelemente zum federnden Halten des Eis (4) ausgebildet sind.

2. Eiertransportbehälter (2) nach Anspruch 1,
**dadurch gekennzeichnet, dass** der Einsatz (14, 36, 38) so hoch ist, dass er bei geschlossenem Behälter (6) ein senkrechtes Spiel von weniger als 1 mm zu einem waagerechten und höchsten Bereich des Deckels des Behälters (6) hat.

3. Eiertransportbehälter (2) nach Anspruch 1 oder 2,
**dadurch gekennzeichnet, dass** der Einsatz (14, 36, 38) mit einem definierten seitlichen Spiel zwischen 1 mm und 3 mm im Behälter (6) gelagert ist, so dass sich der Einsatz (14, 36, 38) und die in ihm gelagerten Eier bei einem seitlichen Stoß als Ganzes entsprechend dem Spiel seitlich bewegen.

4. Eiertransportbehälter (2) nach einem der vorhergehenden Ansprüche,
**dadurch gekennzeichnet, dass** der Einsatz (14, 36, 38) einstückig ausgeführt und mit einem Fuß (52) zum Stehen auf einem Boden des Behälters (6) versehen ist und der Fuß (52) und der Boden einen Forneschluss bilden, wobei der Einsatz (14, 36, 38) nach oben aus dem Behälter (6) entnehmbar ist.

5. Eiertransportbehälter (2) nach Anspruch 4,
**dadurch gekennzeichnet, dass** der Einsatz (14, 36, 38) in seitlichen Richtungen über den Fuß (52) hinausragt und der Formschluss den Einsatz (14, 36, 38) gegen ein Verrutschen auf dem Boden in zwei senkrecht zueinander stehende Richtungen sichert.

6. Eiertransportbehälter (2) nach einem der vorhergehenden Ansprüche,
**dadurch gekennzeichnet, dass** der Einsatz (14) mit einem Fuß (52) zum Stehen auf einem Boden des Behälters (6) versehen ist und der Fuß (52) mit einer Erhebung (58) punkt- oder linienförmig auf einer planen Oberfläche (24) des Behälters (6) steht.

7. Eiertransportbehälter (2) nach einem der vorhergehenden Ansprüche,
**dadurch gekennzeichnet, dass** der Einsatz (14, 36, 38) im geometrischen Zentrum des symmetrisch Einsatzes ein Griffelement (30, 76) zum Herausnehmen des Einsatzes (14, 36, 38) aus dem Behälter (6) aufweist und das Griffelement (30, 76) mindestens doppelt so hoch über den Boden des Behälters (6) aufragt wie der höchste Punkt von den Elementen (70), die gelagerte Eier radial außen halten.

8. Eiertransportbehälter (2) nach Anspruch 7,
**dadurch gekennzeichnet, dass** das Griffelement (30, 76) im Einsatz (14, 36, 38) beweglich gelagert ist und in eine untere und eine obere, von im Einsatz (14, 36, 38) gelagerten Eiern (4) weitere entferntere Position bringbar ist.

9. Eiertransportbehälter. (2) nach Anspruch 8,
**dadurch gekennzeichnet, dass** der Einsatz (14, 36, 38) ein arretiermittel ()40 zum Arretieren des Griffelement (30, 76) in der oberen Position aufweist.

10. Eiertransportbehälter (2) nach einem der vorhergehenden Ansprüche,
**dadurch gekennzeichnet, dass** der Eihalter (28) in seinem der Keile der Suppenkelle entsprechenden Segment (66) eine untere und mehrere seitliche Ausnehmungen (68) aufweist, wobei die untere Ausnehmung um den tiefsten Punkt eines gelagerten Eis (4) gebildet ist.

11. Eiertransportbehälter (2) nach einem der vorhergehenden Ansprüche,
**dadurch gekennzeichnet, dass** der Einsatz (14, 36, 38) mehrere gleiche Eihalter (28) zum Halten jeweils eines einzigen Eis (4) aufweist, die karussellartig rotationssymmetrisch um eine geometrische Mitte des Einsatzes (14, 36, 38) angeordnet sind, wobei jeder Eihalter (28) von seinen beiden benachbarten Eihaltern (28) außerhalb eines durch die Zentren von gelagerten Eiern gehende Radius um die Mitte voneinander beabstandet sind.

12. Verwerdung eines Einsatzes (14, 36, 38) eines Eiertransportbehälters (2) nach Anspruch 1 als Vorrichtung zum Halten von Eiern (4) in einem Topf beim Kochen der Eier (4), wobei der Einsatz ein Bauelement mit einer waagerechten Kante aufweist,
**dadurch gekennzeichnet, dass** das der Einsatz (14, 36, 38) aus einem Behälter (6) des Eiertransportbehälters (2) an einem geometrisch zentralen Griffelement (30, 76) des Einsatzes (14, 36, 38) herausgenommen und unter Festhalten des griffelementes (30, 76) in zumindest 80°C heißes Wasser im Topf abgestellt wird, wobei die Menge an Wasser im Topf so gewählt ist, dass die Wassertiefe im Topf zwischen 8 mm und 15 mm liegt und die Kante weniger als 5 mm unterhalb der Wasseroberfläche ist.

13. Verwendung nach Anspruch 12,
**dadurch gekennzeichnet, dass** das heiße Wasser den Einsatz (14, 36, 38) bis auf einen zentralen Bereich (64) überspült, wobei dessen Radius parallel zum Wasserspiegel weniger als 60% des Gesamtradius des Einsatzes (14, 36, 38) ausmacht und das Griffelement (30, 76) höher über das heiße Wasser aufragt, als das Wasser tief ist.

## Claims

1. An egg transport container (2) for transporting and storing a plurality of eggs (4), comprising an outer container (6) encompassing the eggs and at least one insert (14, 36, 38) removably disposed in the outer container (6), the at least one insert (14, 36, 38) being configured to secure at least one egg (4) within the container (6), wherein the insert (14, 36, 38) has at least one egg holder (28) for holding a single egg (4), and the egg holder (28) is formed as a ladle having a holder, corresponding to the handle of the ladle, and a bowl, wherein the geometric centre of the insert (14, 36, 38), the holder and the bowl lie in a line, **characterized in that** the egg holder (28) has a plurality of finger-like bearing segments (70) for bearing against an egg (4) secured therein, and at least two of the bearing segments (70) are configured as spring elements for resiliently holding the egg (4).

2. Egg transport container according to claim 1,
**characterized in that** the insert (14, 36, 38) has a given height defining in a closed outer container (6) a vertical clearance of less than 1 mm to a horizontal and highest region of the lid of the container (6).

3. Egg transport container according to claim 1 or 2,
**characterized in that** the insert (14, 36, 38) is mounted in the container (6) with a defined lateral clearance of between 1 mm and 3 mm, so that the insert (14, 36, 38) and the eggs stored therein, in case of a lateral impact, move sideways en bloc in accordance with the clearance.

4. Egg transport container according to one of the preceding claims,
**characterized in that** the insert (14, 36, 38) is a one-piece integral insert provided with a foot (52) for standing on a base of the container (6), and wherein the foot (52) and the base of the container (6) are form-locked and the insert (14, 36, 38) is removable from the container (6) in an upward direction.

5. Egg transport container according to claim 4,
**characterized in that** the insert (14, 36, 38) projects in lateral directions beyond the foot (52) and the form lock secures the insert (14, 36, 38) against slippage on the base in two mutually perpendicular directions.

6. Egg transport container according to one of the preceding claims,
**characterized in that** the insert (14) is formed with a foot (52) for standing on a base of the container (6), and the foot (52) stands with an elevation punctiformly or linearly on a flat surface of the container (6).

7. Egg transport container according to one of the preceding claims,
**characterized in that** the insert (14, 36, 38) is substantially symmetrical and has a geometric center, and the insert includes a handle element (30, 76) disposed at the geometric center for removing the insert (14, 36, 38) from the container (6), wherein the handle element (30, 76) rises up at least twice as high over the base of the container (6) as a highest point of elements (70) holding the eggs radially on the outside.

8. Egg transport container according to claim 7,
**characterized in that** the handle element (30, 76) is movably mounted in the insert (14, 36, 38) between a lower position and an upper position farther remote from the eggs (4) stored in the insert (14, 36, 38).

9. Egg transport container according to claim 8,
**characterized in that** the insert (14, 36, 38) includes locking means (40) for locking the handle element (30, 76) in the upper position.

10. Egg transport container according to one of the preceding claims,
**characterized in that** the egg holder (28) comprises in the segment (66) corresponding to the scoop of the ladle, a lower recess and a plurality of lateral recesses (68), wherein the lower recess is formed around the lowest point of a stored egg (4).

11. Egg transport container according to one of the preceding claims,
**characterized in that** the insert (14, 36, 38) has a plurality of substantially identical egg holders (28) each for holding a single egg (4), and arranged in a pattern of a carousel in rotational symmetry around a geometric middle of the insert (14, 36, 38), wherein each egg holder (28) is mutually distanced around the middle from its two neighbouring egg holders (28), outside of a radius passing through the centres of stored eggs.

12. Use of an insert (14, 36, 38) of an egg transport container (2) according to claim 1 as a device for holding eggs (4) in a pan during the boiling of the eggs (4), wherein the insert (14, 36, 38) has a structural element having a horizontal edge, **characterized in that** the insert (14, 36, 38) is removed from a container (6) of the egg transport container (2) by a handle element (30, 76) in the geometric centre of the insert (14, 36, 38) with the handle element (30, 76) grasped, and, with the handle element (30, 76) held fast, is deposited in at least 80 °C hot water in the pan, wherein the quantity of water in the pan is chosen, such that the water depth in the pan is between 8 mm and 15 mm, and the edge is less than 5 mm beneath the water surface.

13. Use according to claim 12,
**characterized in that** the hot water washes over the insert (14, 36, 38) except for a central region, and a radius of the central region (64) parallel to a water level accounts for less than 60% of a total radius of the insert (14, 36, 38), and wherein the handle element (30, 76) rises up higher above a hot water level than a depth of the water.

## Revendications

1. Conteneur de transport d'oeufs (2) pour le transport et le stockage d'un certain nombre d'oeufs (4) qui présente un conteneur extérieur (6) qui enveloppe les oeufs (4) et au moins un insert (14, 36, 38), placé dans le conteneur (6) et pouvant être retiré du conteneur (6), pour le support d'au moins un oeuf à l'intérieur du conteneur (6), l'insert (14, 36, 38) présentant au moins un support d'oeuf (28) pour tenir un seul oeuf (4) et le support d'oeuf (28) étant formé en forme de louche avec un support correspondant au manche de la louche et une coupelle, le centre géométrique de l'insert (14, 36, 38), le support et la coupelle étant situés dans une ligne,
**caractérisé en ce que** le support d'oeuf (28) présente plusieurs segments d'appui (70) réalisés en surface formant des doigts pour l'appui contre l'oeuf supporté (4), dont au moins deux sont configurés comme des éléments élastiques pour le support élastique de l'oeuf (4).

2. Conteneur de transport d'oeufs (2) selon la revendication 1,
**caractérisé en ce que** l'insert (14, 36, 38) est si haut qu'il a, lorsque le conteneur (6) est fermé, un jeu vertical de moins d'1 mm par rapport à une zone horizontale et la plus haute du couvercle du conteneur (6).

3. Conteneur de transport d'oeufs (2) selon la revendication 1 ou 2,
**caractérisé en ce que** l'insert (14, 36, 38) est positionné dans le conteneur (6) avec un jeu latéral défini entre 1 mm et 3 mm si bien que, lors d'un choc latéral, l'insert (14, 36, 38) et les oeufs stockés dans celui-ci se déplacent latéralement comme un tout de manière correspondante au jeu.

4. Conteneur de transport d'oeufs (2) selon l'une des revendications précédentes,
**caractérisé en ce que** l'insert (14, 36, 38) est réalisé en une pièce et est pourvu d'un pied (52) pour être debout sur un fond du conteneur (6) et que le pied (52) et le fond forment une fermeture crabotée, l'insert (14, 36, 38) pouvant être retiré du conteneur (6) vers le haut.

5. Conteneur de transport d'oeufs (2) selon la revendication 4,
**caractérisé en ce que** l'insert (14, 36, 38) fait saillie au-dessus du pied (52) dans des sens latéraux et que la fermeture crabotée bloque l'insert (14, 36, 38) contre un glissement sur le fond dans deux sens perpendiculaires l'un à l'autre.

6. Conteneur de transport d'oeufs (2) selon l'une des revendications précédentes,
**caractérisé en ce que** l'insert (14) est pourvu d'un pied (52) pour tenir debout sur un fond du conteneur (6) et que le pied (52) avec un rehaussement (58) est debout en forme de point ou de ligne sur une surface plane (24) du conteneur (6).

7. Conteneur de transport d'oeufs (2) selon l'une des revendications précédentes,
**caractérisé en ce que** l'insert (14, 36, 38) présente, dans le centre géométrique de l'insert symétrique, un élément de prise (30, 76) pour retirer l'insert (14, 36, 38) du conteneur (6) et que l'élément de prise (30, 76) fait saillie d'au moins le double de la hauteur au-dessus du fond du conteneur (6) par rapport au point le plus haut des éléments (70) qui maintiennent des oeufs stockés dans le sens radial du côté extérieur.

8. Conteneur de transport d'oeufs (2) selon la revendication 7,
**caractérisé en ce que** l'élément de prise (30, 76) est positionné mobile dans l'insert (14, 36, 38) et peut être amené dans une position inférieure et une autre position, une position supérieure plus éloignée des oeufs (4) stockés dans l'insert (14, 36, 38).

9. Conteneur de transport d'oeufs (2) selon la revendication 8,
**caractérisé en ce que** l'insert (14, 36, 38) présente un moyen d'arrêt (40) pour arrêter l'élément de prise (30, 76) dans la position supérieure.

10. Conteneur de transport d'oeufs (2) selon l'une des revendications précédentes,
**caractérisé en ce que** le support d'oeuf (28) présente, dans son segment (66) correspondant à la coupelle de la louche, un évidement inférieur et plusieurs évidements latéraux (68), l'évidement inférieur étant formé autour du point le plus bas d'un oeuf stocké (4).

11. Conteneur de transport d'oeufs (2) selon l'une des revendications précédentes,
**caractérisé en ce que** l'insert (14, 36, 38) présente plusieurs supports d'oeuf pareils (28) pour maintenir chacun un seul oeuf (4) qui sont placés à la manière d'un carroussel de façon symétrique en rotation autour d'un milieu géométrique de l'insert (14, 36, 38), chaque support d'oeuf (28) étant espacé de ses deux supports d'oeuf voisins (28) à l'extérieur d'un rayon qui passe par les centres des oeufs stockés autour du milieu.

12. Utilisation d'un insert (14, 36, 38) d'un conteneur de transport d'oeufs (2) selon la revendication 1 comme dispositif pour tenir des oeufs (4) dans une casserole lors de la cuisson des oeufs (4), l'insert présentant un composant avec une arête horizontale,
**caractérisée en ce que** l'insert (14, 36, 38) est retiré d'un conteneur (6) du conteneur de transport d'oeufs (2) par un élément de prise (30, 76) au centre géométrique de l'insert (14, 36, 38) et est déposé dans de l'eau chaude à au moins 80°C dans la casserole en tenant l'élément de prise (30, 76), la quantité d'eau dans la casserole étant choisie telle que la profondeur de l'eau dans la casserole se situe entre 8 mm et 15 mm et l'arête est moins de 5 mm au-dessous de la surface de l'eau.

13. Utilisation selon la revendication 12,
**caractérisée en ce que** l'eau chaude recouvre l'insert (14, 36, 38) hormis une zone centrale (64), le rayon de celle-ci parallèlement au niveau de l'eau faisant moins de 60% du rayon total de l'insert (14, 36, 38) et l'élément de prise (30, 76) faisant saillie au-dessus de l'eau chaude d'une hauteur plus grande que la profondeur de l'eau.
